# FASCICULE DE BREVET EUROPEEN

(11) **EP 3 372 844 B1**
(45) Date de publication et mention de la délivrance du brevet: **11.12.2019**
(21) Numéro de dépôt: 18158475.6
(22) Date de dépôt: 23.02.2018
(51) Int. Cl.: F15B 13/043, G05D 16/20, B64C 25/42, F15B 5/00, F15B 13/02, F15B 13/04, F15B 13/044

(54) **SERVOVALVE DE RÉGULATION DE PRESSION À DÉBIT DE FUITE RÉDUIT**
SERVOVENTIL ZUR DRUCKREGULIERUNG MIT REDUZIERTEM FLÜSSIGKEITSDURCHSATZ
A PRESSURE REGULATION SERVO-VALVE WITH REDUCED LEAKAGE FLOW RATE

(30) Priorité: 24.02.2017 FR 1751487
(43) Date de publication de la demande: 12.09.2018
(73) Titulaire: Safran Landing Systems, 78140 Vélizy-Villacoublay (FR)
(72) Inventeur: BRIANCON MARJOLLET, Alain, 78140 VELIZY-VILLACOUBLAY (FR); DELLOUE, David, 78140 VELIZY-VILLACOUBLAY (FR)
(74) Mandataire: Lavialle, Bruno François Stéphane

(56) Documents cités:
- EP-A1- 2 309 135
- FR-A1- 2 873 828
- US-A- 3 486 801

## Description

L'invention concerne une servovalve de régulation de pression à débit de fuite réduit.

### ARRIERE-PLAN DE L'INVENTION

Ce type de servovalve est par exemple utilisé pour contrôler des freins hydrauliques de véhicule, notamment des freins d'aéronefs.

On connaît des servovalves à régulation de pression comportant un corps présentant un port d'utilisation, un port d'alimentation et un port de retour, et un tiroir de distribution monté mobile dans le corps de façon à mettre en relation le port d'utilisation soit avec le port d'alimentation soit avec le port de retour. Les extrémités du tiroir de distribution définissent avec le corps au moins une chambre de pilotage connectée à une buse agencée pour déboucher dans une cavité reliée au port de retour. Une palette s'étendant dans la cavité en regard de la buse est montée mobile de façon commandée. La chambre de pilotage est reliée via un restricteur au port d'alimentation. Le cas échéant, la servovalve peut comporter deux chambres de pilotage exerçant des efforts antagonistes sur le tiroir de distribution, chacune des chambres étant reliées à des buses montées en regard l'une de l'autre et entre lesquelles s'étend la palette.

Le déplacement commandé de la palette en regard de la ou des buses permet de moduler les pressions régnant dans les chambres de pilotage, et donc de déplacer le tiroir de distribution en vue de moduler la pression d'utilisation.

Ce type de servovalve a pour inconvénient de présenter un débit de fuite important. En effet, du fluide hydraulique s'écoule en permanence par les buses pour être redirigé vers le port de retour. Cette fuite oblige à dimensionner les réservoirs de fluide hydraulique en conséquence de façon à pouvoir assurer un freinage du véhicule même en cas de panne de génération hydraulique.

Une solution à ce problème a été proposée dans le document FR2873828 qui consiste à relier la ou les chambres de pilotage au port d'utilisation. Le port d'utilisation se trouve plus souvent à des pressions inférieures à la pression d'alimentation. La connexion de la ou des chambres de pilotage au port d'utilisation permet un abaissement de la pression régnant en moyenne dans la ou les chambres de pilotage, impliquant un abaissement concomitant du débit de fuite par la ou les buses.

Cependant, il existe des circonstances de fonctionnement dans lesquelles une telle disposition peut conduire à des difficultés de réponse de la servovalve. En effet, lorsque les freins ne sont pas sollicités, la pression d'utilisation est sensiblement égale à la pression de retour et l'effort de pilotage, qui est alors essentiellement produit par le ressort agissant sur le tiroir de distribution, peut être insuffisant pour déplacer le tiroir de distribution lorsque les freins sont de nouveau sollicités, par exemple à basse température ou si le déplacement du tiroir de distribution est gêné par une impureté dans le fluide hydraulique. On observe alors des démarrages difficiles, suivis parfois d'oscillations de pression d'utilisation. L'utilisation d'une boucle de rétroaction en pression pour la commande du tiroir de distribution n'aide pas la servovalve lorsqu'elle se trouve dans une telle situation.

### OBJET DE L'INVENTION

L'invention vise à proposer une servovalve de régulation de pression à faible fuite, mais disposant néanmoins d'une dynamique de réponse suffisante.

### BREVE DESCRIPTION DE L'INVENTION

En vue de la réalisation de ce but, on propose une servovalve de régulation de pression comportant un corps présentant un port d'utilisation, un port d'alimentation et un port de retour, un tiroir de distribution monté mobile à ajustement dans le corps de façon à mettre en relation le port d'utilisation avec le port d'alimentation et le port de retour selon des sections de passage respectives déterminées par la position du tiroir de distribution, le tiroir de distribution définissant avec le corps une chambre de pilotage reliée au port d'utilisation via un premier restricteur et connectée à une buse débouchant dans une cavité reliée au port de retour, une palette étant montée mobile de façon commandée dans la cavité en regard de la buse pour réguler un débit de fuite par la buse, donc une pression de pilotage dans la chambre de pilotage agissant sur le tiroir de distribution pour déplacer celui-ci dans un premier sens. Selon l'invention, le tiroir de distribution et le corps définissent en outre une chambre de pilotage auxiliaire reliée au port d'alimentation via un deuxième restricteur et reliée à la buse via un troisième restricteur, et dans laquelle règne une pression d'amorçage agissant sur le tiroir de distribution dans le premier sens.

Cette disposition permet de disposer dans la chambre de pilotage auxiliaire d'une pression d'amorçage suffisante pour assurer des démarrages efficaces du tiroir de distribution même en cas de pression d'utilisation faible, ou en cas d'un effort antagoniste bloquant ou freinant le tiroir de distribution, au prix d'une légère augmentation du débit de fuite.

### BREVE DESCRIPTION DES DESSINS

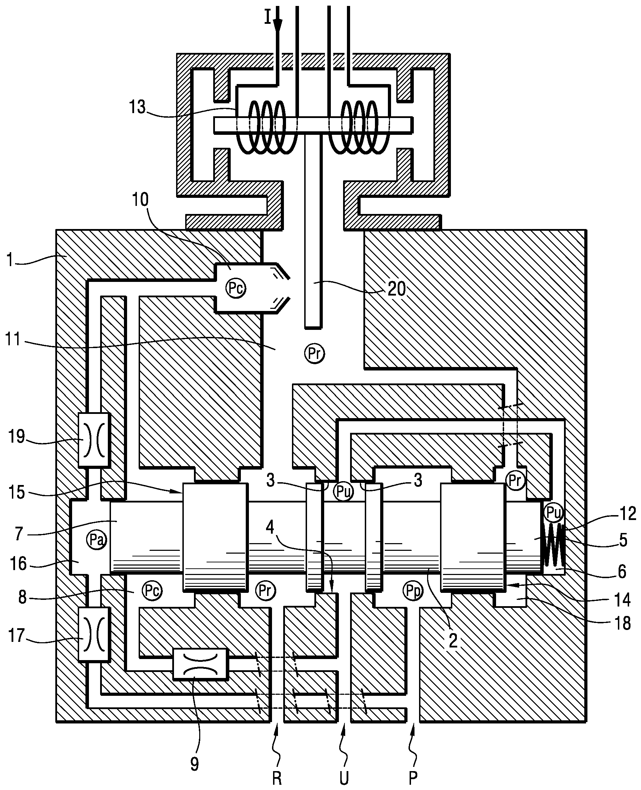

L'invention sera mieux comprise à la lumière de la description qui suit en référence à l'unique figure du dessin annexé illustrant en coupe schématique une servovalve selon l'invention.

### DESCRIPTION DETAILLEE DE L'INVENTION

En référence à la figure, la servovalve de régulation de pression selon l'invention comporte un corps 1 comportant un port d'alimentation P destiné à être connecté à une source de fluide hydraulique sous pression, un port de retour R destiné à être connecté à un circuit de retour du fluide vers un réservoir (non représenté), et un port d'utilisation U destiné à être connecté à un équipement, par exemple la cavité hydraulique d'un frein d'aéronef (non représenté).

Un tiroir de distribution 2 est monté dans un orifice calibré du corps 1 pour coulisser. Le tiroir de distribution 2 comporte des portées 3 qui coopèrent avec un faible jeu avec une partie centrale 4 de l'orifice calibré et qui s'étendent entre le port d'utilisation U et le port de retour R d'une part, et entre le port d'utilisation U et le port d'alimentation P d'autre part.

Les passages subsistant du fait du jeu de coulissement entre les portées 3 et la partie centrale 4 de l'orifice calibré mettent en communication le port d'utilisation U au port de retour R et au port d'alimentation P. Dans la position représentée, les passages subsistant entre chacune des portées 3 et la partie centrale 4 de l'orifice calibré sont égaux, de sorte que la pression d'utilisation Pu est égale à la moyenne de la pression de retour Pr et de la pression d'alimentation Pp.

Lorsque le tiroir de distribution se déplace, l'un des passages augmente tandis que l'autre diminue, de sorte que la pression d'utilisation prend pour valeur une moyenne pondérée par les sections de passage de la pression de retour et de la pression d'alimentation. Le déplacement du tiroir de distribution permet donc de régler la pression d'utilisation Pu à une valeur située entre la pression de retour Pr et la pression d'alimentation Pp.

Le tiroir de distribution 2 le corps 1 une chambre de pilotage 8, ici une chambre annulaire qui est reliée au port d'utilisation U via un premier restricteur 9 et dans laquelle règne une pression de commande Pc qui s'applique sur la section annulaire 15.

La chambre de pilotage 8 est par ailleurs reliée à une buse 10 qui débouche dans une cavité 11 du corps 1 reliée au port de retour R et dans laquelle règne la pression de retour Pr. Dans la cavité 11, et en regard de la buse 10, s'étend une palette 20 mobile qui est actionné par un moteur couple 13 électrique (alimenté par un courant électrique I) pour s'éloigner ou se rapprocher de la buse 10. Le déplacement de la palette 20 en regard de la buse 10 permet de moduler à volonté la pression de commande Pc régnant dans la buse 10 (et donc dans la chambre de pilotage 8) entre la pression de retour et la pression d'utilisation.

Par ailleurs, et selon un aspect essentiel de l'invention, le tiroir de distribution comporte une première extrémité 7 qui définit avec le corps 1 une chambre de pilotage auxiliaire 16 qui est reliée au port d'alimentation P via un troisième restricteur 17 et dans laquelle règne une pression d'amorçage Pa qui s'applique sur l'extrémité 7.

La chambre de pilotage auxiliaire 16 est par ailleurs reliée à la buse 10 par un troisième restricteur 19, de sorte que la pression d'amorçage Pa varie, quoique dans une proportion moindre que la pression de commande Pc, avec le déplacement de la palette 20.

L'action de la pression de commande Pc dans la chambre de pilotage 8 et de la pression d'amorçage Pa dans la chambre de pilotage auxiliaire 16 tend à déplacer le tiroir de distribution dans un premier sens de déplacement (vers la droite sur la figure) de sorte à faire augmenter la pression d'utilisation.

Le tiroir de distribution 2 comporte une deuxième extrémité 5 qui définit avec le corps 1 une chambre de rétroaction 6 qui est reliée au port d'utilisation U et dans laquelle règne la pression d'utilisation Pu qui s'applique sur la première extrémité 5.

Le tiroir de distribution 2 définit avec le corps 1 une chambre annulaire de compensation 18 qui est reliée au port de retour R et dans laquelle règne la pression de retour Pr qui s'applique sur la section annulaire 14.

L'action de la pression d'utilisation Pu dans la chambre de rétroaction 6 et de la pression de retour Pr dans la chambre de compensation 18 tend à déplacer le tiroir de distribution dans un deuxième sens (vers la gauche sur la figure) opposé au premier sens, de sorte à faire diminuer la pression d'utilisation.

Enfin, un ressort 12 est disposé dans la servovalve pour agir sur la deuxième extrémité 5 et pousser le tiroir de distribution 2 dans le deuxième sens.

La connexion de la buse 10 au port d'utilisation U au lieu du port d'alimentation P limite le débit de fuite par la buse dans la mesure où la pression d'utilisation Pu est pratiquement toujours inférieure à la pression d'alimentation Pp. En particulier, lorsque l'actionneur relié au port d'utilisation U n'est pas sollicité (ce qui est une situation courante dans le cas d'un frein d'aéronef), cette pression est légèrement supérieure à la pression de retour Pr, de sorte qu'il n'y a peu ou pas de débit par la buse. La fuite est alors quasi nulle.

Dans cette situation, le démarrage du tiroir de distribution 2 est facilité par l'action de la pression d'amorçage Pa dans la chambre de pilotage auxiliaire 16, qui est suffisamment importante pour faire décoller le tiroir de distribution de sa position alors que la pression Pc, qui est forcément inférieure à la pression d'utilisation Pu, reste très faible.

L'invention n'est pas limitée à ce qui vient d'être décrit, mais bien au contraire englobe toute variante entrant dans le cadre défini par les revendications.

En particulier, bien que la servovalve illustrée ne comporte qu'une seule chambre de pilotage, la servovalve de l'invention pourra comporter deux chambres de pilotage reliées chacune a une buse, du moment qu'au moins l'une des chambres de pilotage soit reliée au port d'utilisation. En outre, bien que la chambre de pilotage 8 est annulaire alors que la chambre d'amorçage 16 est pleine, on pourra bien entendu intervertir ces deux chambres. De même, bien que la chambre de rétroaction 6 est pleine alors que la chambre de compensation 18 est annulaire, on pourra intervertir ces deux chambres.

## Revendications

1. Servovalve de régulation de pression comportant un corps (1) présentant un port d'utilisation (U), un port d'alimentation (P) et un port de retour (R), un tiroir de distribution (2) monté mobile à ajustement dans le corps de façon à mettre en relation le port d'utilisation avec le port d'alimentation et le port de retour selon des sections de passage respectives déterminées par la position du tiroir de distribution, le tiroir de distribution définissant avec le corps une chambre de pilotage (8) reliée au port d'utilisation via un premier restricteur (9) et connectée à une buse (20) débouchant dans une cavité (11) reliée au port de retour, une palette (20) étant montée mobile de façon commandée dans la cavité en regard de la buse pour réguler un débit de fuite par la buse, donc une pression de pilotage (Pc) dans la chambre de pilotage agissant sur le tiroir de distribution pour déplacer celui-ci dans un premier sens, **caractérisé en ce que** le tiroir de distribution et le corps définissent en outre une chambre d'amorçage (16) reliée au port d'alimentation via un deuxième restricteur (17) et reliée à la buse via un troisième restricteur (19) et dans laquelle règne une pression d'amorçage (Pa) agissant sur le tiroir de distribution dans le premier sens.

2. Servovalve selon la revendication 1, dans laquelle le tiroir de distribution (2) définit avec le corps (1) une chambre de rétroaction (6) reliée au port d'utilisation (U) et agissant sur le tiroir de distribution pour le déplacer dans un deuxième sens opposé au premier sens.

3. Servovalve selon la revendication 1, dans laquelle le tiroir de distribution (2) définit avec le corps (1) une chambre de compensation (18) reliée au port de retour (R) et agissant sur le tiroir de distribution pour le déplacer dans un deuxième sens opposé au premier sens.

4. Servovalve selon la revendication 1, comportant un ressort agissant sur le tiroir de distribution (2) pour le déplacer dans un deuxième sens opposé au premier sens.

## Patentansprüche

1. Servoventil zur Druckregulierung, umfassend einen Körper (1), der eine Nutzungsöffnung (U), eine Versorgungsöffnung (P) und eine Rücklauföffnung (R) umfasst, einen Verteilerschieber (2), der in dem Körper derart beweglich mit Passung gelagert ist, dass er die Nutzungsöffnung mit der Versorgungsöffnung und der Rücklauföffnung gemäß jeweiligen Durchflussquerschnitten in Verbindung bringt, die von der Position des Verteiterschiebers bestimmt werden, wobei der Verteilerschieber mit dem Körper eine Steuerkammer (8) definiert, die mit der Nutzungsöffnung über eine erste Drossel (9) verbunden und an eine Düse (20) angeschlossen ist, die in einen Hohlraum (11) mündet, der mit der Rücklauföffnung verbunden ist, wobei eine Platte (20) auf gesteuerte Weise beweglich in dem Hohlraum gegenüber der Düse gelagert ist, um einen durch die Düse hindurchgehenden Leckstrom und folglich einen Steuerdruck (Pc) in der Steuerkammer zu regeln, der auf den Verteilerschieber einwirkt, um diesen in eine erste Richtung zu verschieben, **dadurch gekennzeichnet, dass** der Verteilerschieber und der Körper ferner eine Anlasskammer (16) definieren, die mit der Versorgungsöffnung über eine zweite Drossel (17) verbunden ist und mit der Düse über eine dritte Drossel (19) verbunden ist und in der ein Anlassdruck (Pa) herrscht, der auf den Verteilerschieber in die erste Richtung einwirkt.

2. Servoventil nach Anspruch 1, bei dem der Verteilerschieber (2) mit dem Körper eine Rückführungskammer (6) definiert, die mit der Nutzungsöffnung (U) verbunden ist und die auf den Verteilerschieber einwirkt, um ihn in eine zweite Richtung entgegengesetzt zur ersten Richtung zu verschieben.

3. Servoventil nach Anspruch 1, bei dem der Verteilerschieber (2) mit dem Körper (1) eine Ausgleichskammer (18) definiert, die mit der Rücklauföffnung (R) verbunden ist und die auf den Verteilerschieber einwirkt, um ihn in eine zweite Richtung entgegengesetzt zur ersten Richtung zu verschieben.

4. Servoventil nach Anspruch 1, umfassend eine Feder, die auf den Verteilerschieber (2) einwirkt, um ihn in eine zweite Richtung entgegengesetzt zur ersten Richtung zu verschieben.

## Claims

1. A pressure regulation servo-valve comprising a body (1) having a utilization port (U), a feed port (P) and a return port (R), a spool (2) mounted as a sliding fit in the body so as to put the utilization port in communication with the feed port and with the return port depending on respective flow sections determined by the position of the spool, the spool co-operating with the body to define a pilot chamber (8) connected to the utilization port via a first constriction (9) and connected to a nozzle (10) leading into a cavity (11) connected to the return port, a flapper (20) being mounted to move in controlled manner in the cavity facing the nozzle in order to regulate the leakage flow rate through the nozzle, and thus regulate a pilot pressure (Pc) in the pilot chamber acting on the spool in order to move it in a first direction, the servo-valve being **characterized in that** the spool and the body together further define a priming chamber (16) connected to the feed port via a second constriction (17) and connected to the nozzle via a third constriction (19), and in which there exists a priming pressure (Pa) acting on the spool in the first direction.

2. A servo-valve according to claim 1, wherein the spool (2) co-operates with the body (1) to define a feedback chamber (6) connected to the utilization port (U) and acting on the spool in order to move it in a second direction opposite to the first direction.

3. A servo-valve according to claim 1, wherein the spool (2) co-operates with the body (1) to define a compensation chamber (18) connected to the return port (R) and acting on the spool to move it in a second direction opposite to the first direction.

4. A servo-valve according to claim 1, including a spring acting on the spool (2) in order to move it in a second direction opposite to the first direction.
